# NEW EUROPEAN PATENT SPECIFICATION

(11) **EP 3 439 483 B2**
(45) Date of publication and mention of the opposition decision: **22.10.2025**
(45) Mention of the grant of the patent: 05.01.2022
(21) Application number: 17717316.8
(22) Date of filing: 07.04.2017
(51) Int. Cl.: A23D 7/005, C12G 3/005, C12G 3/04

(54) **HYDROALCOHOLIC EMULSION**
HYDROALKOHOLISCHE EMULSION
ÉMULSION HYDROALCOOLIQUE

(30) Priority: 08.04.2016 EP 16164452
(43) Date of publication of application: 13.02.2019
(73) Proprietor: Cargill, Incorporated, Wayzata, MN 55391 (US)
(72) Inventor: VAN BOKKELEN, Reginald, 1800 Vilvoorde (BE); VAN NIEUWENHUYZE, Lutgart, 1800 Vilvoorde (BE)
(74) Representative: Forresters IP LLP
(86) International application number: PCT/US2017/026508
(87) International publication number: WO 2017/177085

(56) References cited:
- EP-A1- 1 078 981
- EP-A1- 2 127 531
- EP-B1- 2 038 400
- WO-A2-2006/079664
- US-A- 3 753 724
- US-A- 4 902 517
- US-A- 5 066 509
- US-A1- 2012 251 687

## Description

### FIELD OF THE INVENTION

The present invention relates to a hydroalcoholic emulsion comprising water, alcohol and fat. The invention also relates to various alcoholic beverages comprising the emulsion.

### BACKGROUND OF THE INVENTION

Hydroalcoholic emulsions comprising water, alcohol and fat are typically used in the manufacturing of beverages, in particular cream-based (also known as creamy) alcoholic beverages. Creamy alcoholic beverages have been marketed for nearly two decades and have appealed to the public since their introduction. Consequently, these beverages have been introduced with greater and greater frequency into the marketplace. Examples of creamy alcoholic beverages include but are not limited to cream liqueurs, cream based cocktails, alcoholic floating creams, carbonated alcoholic creams and other carbonated fat based products, and pressurized alcoholic creams. Creamy alcoholic beverages, e.g. cream liqueurs, can be prepared on the spot, for immediate consumption, by adding milk or cream to an alcoholic beverage.

A known problem with hydroalcoholic emulsions is that the fat component thereof is generally immiscible with the alcohol and any other water-based components contained therein. Additionally, due to the polarity of alcohol, its presence may further exacerbates the instability of the hydroalcoholic emulsion thus necessitating the addition of one or more emulsifying agents to allow miscibility and to maintain a stable emulsion for long term storage. US 4 419 378 discloses a stable, homogenized cream/alcohol-containing beverage comprising cream or milk and alcohol in drink preparation amounts and a high HLB emulsifier.

A further known problem with hydroalcoholic emulsions is that the fat component thereof may exhibit agglomeration, flocculation, precipitation and/or segregation which may lead to a lumpy appearance and unappealing characteristic to the consuming public. US 2012/0251687 attempts to solve this problem by using one or more stabilizers such as pectin, locust bean gum, gum Arabic, fenugreek gum and to manufacture a stable alcoholic milk and/or soy protein-based drink with a pH ranging from 5.2 and 6.5.

Other hydroalcoholic emulsions using pectin are disclosed in WO 2006/079664, US 4902517, EP 2038400 and US 5066509.

The present inventors observed that although the proposed solutions were successful in alleviating the above-mentioned problems, they have had side effects which deleteriously impacted the quality of the creamy alcoholic beverage. One noticed problem is that the use of stabilizers, such as those utilized by US 2012/0251687, may lead in time to a change in the course of time of the creamy alcoholic beverage's viscosity, e.g. said viscosity may increase in time to such an extent that said beverage becomes unpourable. Moreover, color and flavor may also change in the course of time, and in general, such a change means a deterioration. Also, in order to be effective, the stabilizers have to be used in increased concentrations which typically lead to a gritty or sandy mouthfeel.

There is therefore a need in the beverage industry for hydroalcoholic emulsions containing water, an alcohol and fat which have a stable viscosity over the storage period and are characterized by excellent organoleptic properties.

### SUMMARY OF THE INVENTION

The present invention aims to solve the above mentioned underlying technical problems by providing a hydroalcoholic emulsion comprising water, alcohol and fat, characterized in that said emulsion also comprises citrus fibers as texturizer, wherein the alcohol is in an amount of between 5 vol% and 40 vol%.

The inventors observed that the hydroalcoholic emulsion of the invention, hereinafter the inventive emulsion, exhibits a long term stability, i.e. it shows a time-stable viscosity, flavor, taste and/or color which may lead to improved storage properties. In particular, the inventors were able to reach a wider range of viscosities and thus textures of creamy alcoholic beverage by using the inventive emulsion. It has been found that through relatively minor variations in the inventive emulsion's formulation, the appearance, body and/or the organoleptic properties of the beverage can tuned to the desired level. Moreover, the inventors were able to achieve such excellent properties at reduced fat contents.

The above mentioned advantages as well as the other advantages which will become apparent from the detailed disclosure of the invention were even more unexpected due to the fact that the fiber shaped plant-derived texturizers precipitate in alcohol environments (see for example T.F. Schweizer and P. Würsch, Journal of the Science of Food and Agriculture, 30 (1979), pp. 613-619*)*. However, in spite of any technical hurdles, the present inventors were able to harness the properties of said texturizers to make excellent hydroalcoholic emulsions and beverages containing thereof.

### DETAILED DESCRIPTION OF THE INVENTION

The present invention provides hydroalcoholic emulsions which in addition to water, alcohol and fat, it also comprises citrus fibers as texturizer.

By "*texturizer*" is herein understood a component which has a predominant role in defining the texture of a product comprising thereof. With the "*texture of a product*" is herein understood the general structure and disposition of the constituent parts of said product and refers to those qualities of the product that can be felt with the fingers, tongue, palate or teeth.

An emulsion is a composition containing a stable mixture of two immiscible phases, in which droplets of one phase are dispersed throughout the other phase. A typical example of an emulsion is an oil-in-water (O/W) emulsion wherein a certain content of a lipid, e.g. fat, is dispersed in a form of lipid droplets (the dispersed phase) throughout a water content that forms a continuous aqueous phase (the continuous phase). Emulsions are unstable mixtures and do not form spontaneously, thus, in order to mix the continuous and dispersed phases and form the emulsion, an energy input is required, This energy can be applied by any of shaking, stirring, homogenising, spray processing, high pressure pumping and ultrasonic emulsification for example.

According to the invention, the texturizers are in form of fibers, herein also referred to as "*plant-derived texturizing fibers (PDTF)*". The term "*fiber*" as used herein, refers to an elongated object, the fiber having a length (major axis, i.e. the largest dimension that can be measured on the fiber) and a width or diameter (minor axis, i.e. the smallest dimension that can be measured on the fiber) and having length to width ratio of at least 1.5, more preferably at least 2.0, or most preferably at least 3.0, as observed and measured by a high-resolution transmission electron microscope ("TEM"). The dimensions of the fibers are preferably measured on "wet" fibers, i.e. fibers having a moisture content of at least 20 wt% relative to the total weight of fibers; for example wet fibers can be obtained by dispersing in an aqueous medium an amount of 0.1 wt% fibers relative to the total weight of the dispersion. Typically, the fibers of plant derived texturizers contain a plurality of microfibrils, i.e. elongated structures having a width of less than 100 nm (see Gary Chinga-Carrasco, Nanoscale Research Letters 2011, 6:417*)*.

The inventive emulsion contains an ethanol insoluble texturizer from citrus fibers. In other words, said texturizer contains a fraction which is ethanol insoluble, hereinafter "ethanol insoluble fraction (EIF)"; however, said texturizer may also contain a fraction which is ethanol soluble hereinafter "ethanol soluble fraction (ESF)". It is known that plant derived texturizers typically contain various constituents such as sugars, oligosaccharides and polysaccharides and in general, ESF and EIF are polysaccharides with a (weight average) degree of polymerization (DP) above 15 as measured according to any commonly known technique, e.g. gel permeation chromatography. Preferably, said texturizer contain both the ESF and the EIF wherein the weight ratio EIF:ESF is between 99.0 : 1.0 and 70.0 : 30.0, more preferably between 97.5 : 3.5 and 80.0 : 20.0, most preferably between 96.0 : 4.0 and 90.0 : 10.0. Preferably said texturizer comprises the EIF in an amount of at least 65.0 wt% relative to the total weight of anhydrous texturizer, more preferably at least 70.0 wt%, most preferably at least 75.0 wt%. Preferably, said texturizer comprises the ESF in an amount of at most 15.0 wt% relative to the total weight of anhydrous texturizer, more preferably at most 12.0 wt%, most preferably at most 9.0 wt%.

Preferably, the PDTF are obtained from plant cells comprising at least 50%, more preferably at least 70%, even more preferably at least 80%, most preferably at least 85% primary cell walls. Typically, the PDTF are found in both primary and secondary walls of a plant cell. However the PDTF extracted from the secondary walls of a plant cell have a greater degree of crystallinity, e.g. above 70%, and tend to break during a processing thereof. On the other hand, the PDTF extracted from the primary walls of a plant cell and in particular from the cell's parenchyma, can be easily extracted and processed. Parenchyma is a typical example of a tissue found in the primary walls of plant cells.

Preferably, the PDTF used in accordance with the invention have a crystallinity of at least 10%, more preferably at least 20%, most preferably at least 30% as measured on a dried (less than 20 wt% water content relative to the content of fibers) sample by X-ray diffraction method (e.g. the well known Seagal method based on the height of I₀₀₂ peak). Preferably, the crystallinity of said fibers is between 10% and 60%.

The PDTF are citrus fibers. The inventors observed that by using citrus fibers in accordance with the invention, inventive emulsions having rich textures combined with excellent flavors and optimal alcohol contents may be obtained. In addition, the citrus fibers conferred said emulsions specific gravity and stability properties which enabled a designer of cocktails to utilize said emulsions in original and innovative ways to create new (both hot and cold) cocktail designs. Citrus fibers are fibers contained by and obtained from the fruits of the citrus family. The citrus family is a large and diverse family of flowering plants. The citrus fruit is considered to be a specialized type of berry, characterized by a leathery peel and a fleshy interior containing multiple sections filled with juice filled sacs. Common varieties of the citrus fruit include oranges, sweet oranges, clementines, kumquats, tangerines, tangelos, satsumas, mandarins, grapefruits, citrons, pomelos, lemons, rough lemons, limes and leech limes. The citrus fruit may be early-season, mid-season or late-season citrus fruit. Citrus fruits also contain pectin, common in fruits, but found in particularly high concentrations in the citrus fruits. Citrus fiber is to be distinguished from citrus pulp, which are whole juice sacs and are sometimes referred to as citrus vesicles, coarse pulp, floaters, citrus cells, floating pulp, juice sacs, or pulp. Citrus fiber is to be distinguished from citrus rag also, which is a material containing segment membrane and core of the citrus fruit. The citrus fibers are typically obtained from a source of citrus fibers, e.g. citrus peel, citrus pulp, citrus rag or combinations thereof. Moreover, the citrus fibers may contain the components of the primary cell walls of the citrus fruit such as cellulose, pectin and hemicelluloses and may also contain proteins. Preferably, the citrus fibers used in accordance with the invention did not undergo any substantial chemical modification, i.e. said fibers were not subjected to chemical modification processes, in particular esterification, derivatisation or men-induced enzymatic modification or combinations thereof. The length of the citrus fibers is preferably at least 0.5 µm, more preferably at least 1 µm. The width of the citrus fibers is preferably at most 300 nm.

The citrus fibers typically contain various constituents such as sugars, oligosaccharides and polysaccharides. The citrus fibers used in the present invention contain an EIF but they may also contain an ESF. Preferably, the ESF and the EIF of said citrus fibers are present in a weight ratio EIF:ESF of between 99.0 : 1.0 and 70.0 : 30.0, more preferably between 97.5 : 3.5 and 80.0 : 20.0, most preferably between 96.0 : 4.0 and 90.0 : 10.0. Preferably the EIF of said citrus fibers is present in an amount of at least 65.0 wt% relative to the total weight of anhydrous citrus fibers, more preferably at least 70.0 wt%, most preferably at least 75.0 wt%. Preferably, the ESF of said citrus fibers is present in an amount of at most 15.0 wt% relative to the total weight of anhydrous citrus fibers, more preferably at most 12.0 wt%, most preferably at most 9.0 wt%.

In a preferred embodiment, the citrus fibers are lemon fibers wherein the ESF is present in an amount of between 0.5 wt% and 10.0 wt%, more preferably between 1.7 wt% and 7.5 wt%, most preferably between 2.5 wt% and 5.0 wt%, wherein the remaining percentage is constituted of the EIF. In another preferred embodiment, the citrus fibers are orange fibers wherein the ESF is present in an amount of between 3.0 wt% and 15.0 wt%, more preferably between 4.0 wt% and 12.0 wt%, most preferably between 5.0 wt% and 9.0 wt%, wherein the remaining percentage is constituted of the EIF. Said citrus fibers may also contain other components different than the EIF and the ESF, non-limiting examples thereof including sugars and/or oligosaccharides. Preferably, said other components are in an amount of at most 35 wt% relative to the total weight of anhydrous citrus fibers, more preferably at most 30 wt%, most preferably at most 25 wt%.

Preferably, the citrus fibers used in accordance with the invention have a crystallinity of at least 10%, more preferably at least 20%, most preferably at least 30% as measured on a dried (less than 20 wt% water content relative to the content of fibers) sample by X-ray diffraction method (e.g. the well known Seagal method based on the height of I₀₀₂ peak). Preferably, the crystallinity of said fibers is between 10% and 60%.

In a preferred embodiment of the present invention, the inventive emulsion comprises at least 15 wt% of a sugar component, relative to the total weight of the emulsion. More preferably, the inventive emulsion comprises at least 16 wt% of the sugar component, even more preferably at least 17 wt%, yet even more preferably at least 18 wt%, yet even more preferably at least 19 wt%, most preferably at least 20 wt% of the sugar component. Preferably, the inventive emulsion comprises at most 60 wt% of the sugar component, even more preferably at most 50 wt%, yet even more preferably at most 40 wt%, most preferably at most 30 wt% of the sugar component. The sugar component in the present invention can contain or consist essentially of a wide range of sweet-tasting carbohydrates. Sweet-tasting carbohydrates are as such known; examples thereof include sucrose, isomaltulose, trehalose, trehalulose, leucrose, lactose, fructose, glucose, and tagatose. In a preferred embodiment of the present invention, the sugar component contains sucrose, preferably consists essentially of sucrose. In an alternative embodiment of the present invention, the sugar component contains isomaltulose. In a further embodiment of the invention, the sugar component contains or consists essentially of a mixture of two or more sweet-tasting carbohydrates. Ins further preferred embodiment, said sugar component is a sugar syrup having a BRIX of at least 50, preferably at least 55, more preferably at least 60, most preferably at least 60.

Preferably, the PDTF is present in the inventive emulsion in an amount of at least 0.001 wt% relative to the total weight of said emulsion, more preferably at least 0.005 wt%, even more preferably at least 0.01 wt%, yet even more preferably at least 0.03 wt%, most preferably at least 0.06 wt%. Said amount is preferably at most 10.0 wt%, more preferably at most 5.0 wt%, even more preferably at most 3.0 wt%, most preferably at most 2.0 wt%.

In a preferred embodiment, the PDTF is citrus fibers and is present in the inventive emulsion in an amount of at least 0.001 wt% relative to the total weight of said emulsion, more preferably at least 0.005 wt%, even more preferably at least 0.01 wt%, yet even more preferably at least 0.03 wt%, most preferably at least 0.06 wt%. Said amount is preferably at most 5.0 wt%, more preferably at most 2.5 wt%, even more preferably at most 1.5 wt%, most preferably at most 1.2 wt%.

In an alternative embodiment of the invention, the sugar component comprises a sugar alcohol, a mixture of sugar alcohols, or a mixture of one or more sugar alcohols with one or more sweet-tasting carbohydrates. Preferred examples of sugar alcohols, also referred to as polyols, are isomalt, sorbitol, mannitol, xylitol, and erythritol. The sugar alcohol or mixture of sugar alcohols or mixture of sugar alcohol(s) with sweet- tasting carbohydrate(s) may be used in the same weight percentages as indicated above for the sugar component

The inventive emulsion comprises between 5 vol% and 40 vol% alcohol. Preferably, at least 5 vol.-% alcohol, more preferably at least 7 vol.-% alcohol, even more preferably at least 10 vol.-% alcohol, most preferably at least 15 vol.-% alcohol. The emulsion contains at most 40 vol.-% alcohol, more preferably at most 35 vol.-% alcohol, even more preferably at most 30 vol.-% alcohol, most preferably at most 25 vol.-% alcohol. The alcohol in the present invention should be suitable for human consumption; the alcohol should thus comply with the regulatory requirements on the maximum allowable amount of methanol, and preferably be essentially free of methanol. In a preferred embodiment of the present invention, the alcohol contains or consists essentially of ethanol. The alcohol can be provided in pure form, in the form of any aqueous solution, but also in the form of an aqueous solution which has already been flavored, for example wines or spirits such as for example whisky, rum, brandy, bourbon, tequila, cognac, vodka, gin, liqueurs, and the like or any combination of one or more thereof. By using pre-flavored aqueous solutions as alcohols, the inventive emulsion may be manufactured to combine the rich texture of cream based beverages with the flavor and alcohol content of wines and/or spirits.

In accordance with the invention, the hydroalcoholic emulsion comprises also one or more fats. These fats may be any fats which are acceptable for food use, such as for example cream, butter fat, oils and solid fats. Examples of oils that may be used in the present invention include without limitation various modified or unmodified vegetable and animal oils, such as palm oil, avocado oil, mustard oil, flaxseed oil, grape oil, peanut oil, coconut oil, olive oil, thistle oil, grape kernel oil, sesame oil, soybean oil, MCT oil, sunflower oil, linseed oil, cotton oil, rapeseed oil, low erucic rapeseed oil (Canola), corn oil, rice oil, safflower oil, kapok oil, sesame oil, evening primrose oil, fish oil and train (whale) oil and mixtures thereof. Examples of solid fats include without limitation various modified or unmodified vegetable and animal solid fats, such as butter fat and chocolate fat, e.g. cacao butter, shea butter, sal butter; chicken fat; beef tallow; milk fat; lard and mixtures thereof. The above fats and oils may be modified by subjecting them to various treatments, examples thereof including without limitation hydrogenation, fractionation and/or trans-esterification. It is preferred that the one or more fats are at least partially derived from cream since this produces an inventive emulsion having an extraordinarily good flavour. The cream is preferably heavy dairy cream, for example double cream and should preferably have a fat content of between 20 and 60 wt%, more preferably between 30 and 50 wt%. Preferably the cream has a low titrateable acidity.

Preferably, the fat is present in the inventive emulsion in an amount of at most 30 wt%, more preferably at most 26 wt%, even more preferably at most 20 wt%, most preferably at most 16 wt% relative to the total weight of the inventive emulsion. Preferably, said fat amount is at least 1 wt%, more preferably at least 2 wt%, even more preferably at least 3 wt%, most preferably at least 4 wt%. In a preferred embodiment, said fat amount is between 1 wt% and 20 wt%, more preferably between 2 wt% and 14 wt%, most preferably between 4 wt% and 8 wt%.

The inventive emulsion has a preferred pH in the range from 3 to 10, more preferably of 5 - 9, most preferably of 6 - 7. In particular in the latter ranges, there has hitherto been a lack of well-stabilized systems which are stable for a prolonged period of time. It should be noted that a range from 3 - 10 refers to a range from 3 to 10 which preferably includes the limit values of 3 and 10.

The inventive emulsion contains water up to 100 wt%. Preferably, the water is present in the inventive emulsion in an amount of at least 25 wt% relative to the total weight of the emulsion, more preferably at least 30 wt%, most preferably at least 35 wt%. Said amount is preferably at most 70 wt%, more preferably at most 55 wt%, most preferably at most 40 wt%.

The inventive emulsion preferably has a D(4,3) (volume average particle size distribution) of at least 0.5 microns, more preferably at least 1 microns, most preferably at least 1.5 microns. Preferably, said D(4,3) is at most 3.0 microns, most preferably at most 2.0 microns.

The term "stable emulsion", as used in the context of the present application, refers to an emulsion which exhibits substantially no agglomeration or segregation when stored at room temperature, i.e. at a temperature in the range from 15-25° C., for at least 2 months, preferably at least 6 months, more preferably at least 9 months and most preferably at least 12 months. However, although this is less preferred, a small layer of cream or fat may appear on the liquid during storage, but in this case this layer can easily be dispersed again through the drink by simply shaking the drink container. The emulsion is also stable if the D(4,3) during said storage time does not deviate substantially from the D(4,3) just after homogenization and is still less than 4.0 microns, preferably less than 3.0 microns, most preferably less than 2.0 microns.

The inventive emulsion preferably contain one or more proteins such as milk, soy, egg, potato, pea, and wheat proteins and any combination thereof. Most preferred protein is the milk protein.

Preferably, the proteins are provided in a protein-containing mixture which is an aqueous mixture of a citrate comprising one or more substances selected from citric acid and one or more salts thereof, especially alkali metal citrates, for example sodium and/or potassium salts of citric acid, preferably sodium citrate; and the protein, e.g. caseinate.

The term "milk protein" as used in the context of the present application refers to any type of milk protein, such as for example casein, caseinate (sodium, potassium, calcium, magnesium caseinate or mixtures thereof), whey protein, and the like, or mixture of milk proteins, such as for example a mixture of casein, caseinate and whey protein. The milk proteins are preferably derived from a dairy source which simultaneously also provides an aqueous medium, such as for example milk, skimmed milk, concentrated milk, fermented milk or milk which has been subjected to ultrafiltration, but can also be provided in the form of a dairy powder preparation, such as for example milk powder, skimmed milk powder, milk powder concentrate, whey powder concentrate, whey protein concentrate or isolate, or combinations thereof, which can be provided in an aqueous medium. Alternatively, it is possible to use casein or caseinate preparations as source of the one or more milk proteins, optionally in combination with a dairy source as described above. In the case of a dairy powder preparation, it is preferred to use a preparation which comprises the total milk protein combination. Likewise in the case of a dairy source which at the same time also provides an aqueous medium, it is preferred to use a source which comprises the total milk protein combination.

The inventive emulsion may also use soy protein, alone or in combination with milk protein. Examples of sources of soy protein are commercially available soy concentrates (with a protein content of 20-85% by weight) and soy isolates (with a protein content of greater than 85% by weight.

The protein is preferably present in the inventive emulsion in an amount of at least 0.50 wt%, more preferably at least 0.75 wt%, most preferably at least 1.00 wt%, relative to the total weight of the emulsion. Preferably, said protein amount is at most 3.50 wt%, more preferably at most 3.00 wt%, even more preferably at most 2.50 wt%.

It is preferred that flavours, such as coffee flavour or certain fruit flavours, are added to the inventive emulsion. As used in the context of the present application, the term "flavour" encompasses all flavouring compositions, flavours and extracts which can be added to foods in order to impart a defined taste. These flavours are very well known in this specialist field and include, for example, flavours which give the following taste perceptions: yellow fruits (including banana, apricot, pineapple), red fruits (including strawberry, raspberry, fruits of the forest), green fruits (including lemon, apple, pear, grape, melon), tropical fruits (including mango, coconut, lychee, guava, pomegranate), brown flavours (including coffee, chocolate, cognac, beer, caramel, honey), dairy flavours (including yoghurt, soft cheese, buttermilk), alcohol flavours, liqueurs and distillates (including beer, wine, cointreau, brandy, wiskey, tequila, rum).

The inventive emulsion may also comprise additional constituents, such as for example colorants, thickeners, etc. Known colorants include caramel, cochineal, carmine, annatto and other food approved dyes.

The inventive emulsion may also comprise an emulsifier, suitable examples of emulsifiers including without limitation citric acid ester of monoglyceride (E472c), sodium lactylate (E481) and the acetic acid ester of mono- and di-glycerided (E472a). Preferably, the emulsifier is chosen from a group consisting of mono and diglycerides; distilled monoglycerides; mono- and diglycerides of saturated or unsaturated fatty esters; diacetyl tartaric acid esters of mono- and diglycerides (DATEM); modified lecithin; polysorbate 20, 40, 60 or 80; sodium stearyl lactylate; propylene glycol monostearate; succinylated mono- and diglycerides; acetylated mono- and diglycerides; propylene glycol mono- and diesters of fatty acids; polyglycerol esters of fatty acids; lactylic esters of fatty acids; glyceryl monosterate; propylene glycol monopalmitate; glycerol lactopalmitate and glycerol lactostearate; and mixtures thereof. The emulsifiers may be used independently, or two or more kinds may be used in combination.

Preferably, the emulsifier is included in the inventive emulsion between 0.001 and 0.5 wt% relative to the total weight of the inventive emulsion, more preferably included between 0.005 and 0.1 wt%, most preferably included between 0.01 and 0.08 wt%.

In one embodiment, the emulsifier used in accordance to the invention is produced by alcohol esterification of a fat containing fatty acids preferably having C8 to C18 carbon chains, e.g. oleic, stearic or palmitic fatty acids. Preferably sorbitol, polyglycerol or propyleneglycol are used as the alcohol.

In another embodiment, the emulsifier used in accordance to the invention is produced by glycerol trans-esterification of a fat. Example of suitable fats include without limitation palm oil, sunflower oil, rape-seed oil, cotton oil and soya oil. The mono and diglycerides of fatty acids are obtained from this last process.

In a preferred embodiment of the invention, the inventive emulsion has a turbidity of at least 3 NTU per degree Brix (NTU/Bx) at room temperature, preferably at least 5 NTU/Bx, more preferably at least 8 NTU/Bx, even more preferably at least 12 NTU/Bx, most preferably at least 15 NTU/Bx. The parameter turbidity is as such known to the person skilled in the art; it is the result of an optical measurement entailing the sending of light from a light source through a sample, and evaluating the amount of scattered vs. transmitted light. As used herein the turbidity expressed in NTU per brix (Bx) is determined on samples of the inventive emulsion and is determined by using well known turbidity measurement apparatuses e.g. available from a.o. Galvanic Applied Sciences (Monitek line). The turbidity measurement apparatus should be calibrated with samples of known NTU.

Preferably, the inventive emulsion has a viscosity of at least 5 mPa × s (millipascal-second), more preferably at least 10 mPa × s, more preferably at least 15 mPa × s, even more preferably at least 20 mPa × s, most preferably at least 25mPa × s. Preferably, said viscosity is at most 65 mPa × s, more preferably at most 60 mPa × s, more preferably at most 55 mPa × s, even more preferably at most 50 mPa × s, most preferably at most 45 mPa × s.

Preferably, the inventive emulsion has a density of at least 1.01, more preferably at least 1.03, more preferably at least 1.04, even more preferably at least 1.05, most preferably at least 1.06. Preferably, said density is at most 1.09, more preferably at most 1.08, most preferably at most 1.07.

Preferably, the inventive emulsion has a friction factor of at least 0.10, more preferably at least 015, more preferably at least 0.20, even more preferably at least 0.25, most preferably at least 0.28. Preferably, said friction factor is at most 0.60, more preferably at most 0.55, more preferably at most 0.50, even more preferably at most 0.45, most preferably at most 0.40.

The inventive emulsion can be manufacture according to any known method in the art. In a preferred embodiment, the invention relates to a method for manufacturing the inventive emulsion, comprising the steps of:
a) Providing a first mixture by mixing in water the citrus fibers;
b) dispersing the mixture obtained at step a) with a shearing device to obtain a first sheared mixture;
c) Adding the fat and the emulsifier to the first sheared mixture, and optionally adding also the sugar component to the first sheared mixture to obtain a second mixture;
d) dispersing the second mixture obtained at step a) with a shearing device to obtain a second sheared mixture; and
e) adding the alcohol to the second sheared mixture to obtain a hydroalcoholic emulsion.

In a preferred embodiment of the present invention, the inventive emulsion obtained by the methods according to the present invention is an inventive emulsion according to the present invention as outlined above.

Preferably, the mixing in step a) is carried out at a mixing temperature of at least 60 °C, more preferably at least 80 °C, most preferably at least 95 °C. Preferably, said mixing temperature is at most 110 °C, more preferably at most 105 °C, most preferably at most 100°C.

Preferably, the first mixture also comprises a protein. Preferably as much shear as possible is applied at step b) with a high shear mixer, e.g. a Silverson device.

The first sheared mixture is preferably de-foamed in order to remove any foam that may be formed during the shearing at step b).

The fat, the emulsifier and optionally the sugar component are subsequently added to the first sheared mixture to obtain a second mixture, said first sheared mixture being preferably heated to a temperature of at least 30 °C, more preferably at least 50 °C, most preferably at least 70 °C before adding said components. Preferably, before being added to said first sheared mixture, the emulsifier is also heated to a temperature of at least 20 °C, more preferably at least 35 °C, most preferably at least 55 °C. The second mixture may be also dispersed with a shearing device, e.g. Silverson.

The second mixture is subsequently dispersed with a shearing device. In a preferred embodiment of the present invention, the second mixture is dispersed in step d) at a temperature of at least 20 °C, more preferably at least 30 °C, even more preferably at least 40 °C, most preferably at least 50 or even 55 °C. Said temperature is preferably at most 90 °C, more preferably at most 80 °C, even more preferably at most 70 °C, most preferably at most 60 °C.

In a preferred embodiment of the present invention, the second mixture is dispersed in step d) in a homogenizer at a pressure of at least 100 bar, more preferably of at least 200 bar, most preferably of at least 300 bar. Preferably, the second mixture is passed at least once through the homogenizer, more preferably at least twice. The homogenizer may preferably be of the type commonly used in the dairy industry or in processes for preparing known liqueurs; well-known suppliers of such equipment are GEA Niro Soavi and Silverson. The homogenizer can preferably be a one-stage or a two-stage homogeniser.

Any one of the mixtures obtained in the dispersion steps may be stored after completion of the dispersion steps for at least 0.5 day, more preferably at least 1 day, most preferably at least 2 days. Preferably said mixtures are stored at a temperature of at most 15 °C, more preferably at most 10 °C, most preferably at most 5 °C.

The alcohol is added to the second sheared mixture in the desired amount. Other components such as flavors, colorants, and the like can be added before or after dispersing the second mixture, preferably after dispersing said second mixture.

The hydroalcoholic emulsion may also be subjected to thermal treatment to thermize, pasteurize or sterilize it before, during or after packing it, e.g. bottling it, without affecting its properties.

In a preferred embodiment of the present invention, the inventive emulsion is part of a liqueur. In a preferred embodiment of the present invention, the inventive emulsion is a liqueur. In a particularly preferred embodiment of the present invention, the inventive emulsion is a liqueur as defined according to European Union regulations, i.e. according to Council Regulation (EEC) No 1576/89 of 29 May 1989, i.e. a spirit drink, having a minimum sugar content of 100 grams per liter expressed as invert sugar and produced by flavoring ethyl alcohol of agricultural origin or a distillate of agricultural origin or one or more spirit drinks or a mixture of the above, sweetened and possibly with the addition of products of agricultural origin. In a preferred embodiment of the present invention, the sugar component has a degree of sweetness equal to at least 100 g inverted sugar syrup per liter of the formulation

The invention also relates to a cream liqueur comprising, preferably consisting of, the inventive emulsion. The cream liqueur is preferably chosen from the group consisting of milk punch, Alexander^{®}, Pink Squirrel^{®}, Golden Cadillac^{®}, Irish Alexander^{®}, Amaretto Cream^{®}, Irish Whiskey^{®}, Bailey Irish Cream^{®}, Saint Brendan's^{®}, Heather Cream^{®}, Creme de la Creme Maple Cream^{®}, Cruzan Rum Cream^{®}, Amarula^{®}, Voyant Chai Cream^{®}, Dooley's^{®}, Grasshopper^{®} and Cream Whiskey^{®}.

Unless defined otherwise, %-values given the in present description mean weight-% relative to the total weight of the inventive emulsion. The alcohol, especially ethanol is given in vol.- % unless defined otherwise.

In the context of the present invention the term "at least one" preferably has the meaning that one component or more than one components, for example two, three or more components are present. In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

Having described the invention with reference to certain preferred embodiments, other embodiments will become apparent to one skilled in the art from consideration of the specification. The invention is further defined by reference to the following examples and comparative experiments describing in detail the preparation of the composition and methods of use of the invention. It will be apparent to those skilled in the art that many modifications, both to materials and methods, may be practiced without departing from the scope of the invention.

### METHODS OF MEASUREMENT

- **Viscosity, shear stress** and **yield stress** of a beverage were determined by rheological measurements with a controlled stress rheometer (Paar Physica MCR300) equipped with a coaxial cylinder CC 24 and monitored by a Rheoplus/32 V2, Anton Paar. Shear stress values are measured at shear rates from 1 to 100 s⁻¹ with a 120 sec ramp, holding the sample at 20±0.1°C with a Peltier temperature controlled system connected to an external thermostated water bath. Measurements are done in triplicate in each sample and 40 data points are collected for each flow curve. Experimental data are fitted to Newton (σ=ηγ), Ostwald-De-Waele (σ=Kγⁿ), Bingham (σ=σ₀+η'γ) and Hershel-Bulkley (σ= σ₀+ η'γ^{p}). Viscosity values (η=σ/γ) and yield stress are used to characterize the flow behaviour of the beverage samples.
- **D(4,3)** is measured with a Malvern Mastersizer MS2000 static laser light-scattering analyser with absorption parameter value of 0.001. It represents the numerical average of the size of the droplets in the beverage
- **Brix** is measured with a digital refractometer: RFM 340 Bellinghan and Stanley Ltd - UK.
- **NTU** is a measure of the clarity of a liquid. A liquid with high turbidity will appear cloudy or hazy, whilst one with low turbidity will appear clear. Turbidity is determined in Nephelometric Turbidity Units (**NTU**) using a nephelometer (also known as a turbidimeter, e.g. Hach 2100N- Germany), which measures the propensity of particles in the liquid to scatter light. A turbidimeter is calibrated using pre-mixed Formazin solutions (StabCal 26621-10, Hach-Germany) from 0.1, 20, 200, 1000, 4000 NTU.
- **Friction factor and sensory properties** - was determined in accordance with the methodology presented in "The physicochemical and rheological properties oƒ a milk drink flavoured with cajeta, α Mexican caramel jam", M.O. Ramirez-Sucre et al., International Journal of Dairy Technology, Vol 64, No 2 May 2011 (see pg. 296 Sensory Analysis) and Larmond E (1970) Laboratory Methods for Sensory Evaluation of Food. Publication 1284. Canada: Canada Department of Agriculture.
- **Density** is determined by a oscillating U-tube method using a density meter: DMA 4500 Anton Paar - Austria.
- **Colour attributes** are quantified using a spectrophotometer: Minolta Konica CM-5 - Japan with D65 light source at 10° viewing angle. Calibration is based on a standard light brown coloured tile with colour space
- Visual stability of a beverage, is determined from the appearance of the product to a potential consumer. In particular for bottled beverages: Beverage sample is observed for separation into two layers. When a line of demarcation is detected, the ratio of the height of the separated phase to the total height of the beverage is calculated and defined as the separation index. If no separation is observed, the separation index is 00%.

### EXAMPLE 1

The following ingredients were used in the following quantities as presented in Table 1:

**Table 1**

| **INGREDIENTS** | g/l |
|---|---|
| **cream emulsion** | |
| cream (40 % fat) | 200 |
| *mono -diglyceride* | 0,75 |
| sodium caseinate | 25 |
| tri-sodiumcitrate | 1,8 |
| sugar syrup (65 brix) | 292,3 |
| **citrus fibre** | 0,8 |
| water 1 st phase | 302,31 |
| sum | **822,97** |
| | |

| **alcohol and flavour-colour addition** | |
|---|---|
| alcohol (17 %) | 142,79 |
| cream flavour QL-098-081-1 | 2,5 |
| Milk Cream flavour PH-626-646-0 | 0,25 |
| caramel colour E150 b | 3 |
| water 2nd phase | 28,5 |
| sum | **177,04** |
| total sum | **1000,00** |

A hydroalcoholic emulsion was obtained with a method containing the following steps:
a) the sodium caseinate, citrus fiber and the tri-sodium citrate were dissolved in hot water (95 °C) and the solution was sheared in a Silverson for 5 minutes at 3500 rpm.
b) The sheared solution of step a) was deaerated for 1 hour until there was no foam and subsequently stored at 4-5 °C during 2 days
c) The solution was subsequently heated in a water bath until it reached a temperature of between 70-80 °C (water bath at 95 °C).
d) The emulsifier was heated to 55 °C min in a microwave oven and was added together with the sugar component and the cream to the solution followed by careful shearing to avoid vortex in a Silverson at 3500 rpm for 3 minutes.
e) The sheared solution of step d) was homogenized double pass at 55 - 60 °C at 300 bar in a homogenizer.
f) Caramel and flavor were diluted into the water 2^{nd} phase and mixed with the solution of step e) and subsequently sheared in a Silverson at 2500 rom for 3 minutes during which the alcohol was added.

The results are presented in Table 5.

### EXAMPLES 2-6

The ingredients presented in Table 2 were processed in accordance with the method presented in Example 1.

**Table 2**

| | Ex. 2 | Ex. 3 | Ex. 4 | Ex. 5 | Ex. 6 |
|---|---|---|---|---|---|
| **INGREDIENTS** | g/l | | | | |
| **cream emulsion** | | | | | |
| cream (40 % fat) | 100 | 100 | 150 | 200 | 50 |
| *mono -diglyceride* | 0,75 | 0,75 | 0,75 | 0,75 | 0.75 |
| sodium caseinate | 25 | 25 | 25 | 25 | 25 |
| tri-sodiumcitrate | 1,8 | 1,8 | 1,8 | 1,8 | 1,8 |
| sugar syrup (65 brix) | 292,3 | 292,3 | 292,3 | 292,3 | 292,3 |
| **citrus fibre** | 2,0 | 1,0 | 0,90 | 1,5 | 1.2 |
| water 1 st phase | 331,11 | 402,11 | 352,21 | 300,86 | 450.91 |
| sum | 752,97 | 822,97 | 822,97 | 822,22 | 821.97 |
| | | | | | |

| **alcohol and flavour-colour addition** | | | | | |
|---|---|---|---|---|---|
| alcohol (17 %) | 142,79 | 142,79 | 142,79 | 142,79 | 142.79 |
| cream flavour QL-098-081-1 | 2,5 | 2,5 | 2,5 | 2,5 | 2,5 |
| Milk Cream Flavour PH-626-646-00 | 0,25 | 0,25 | 0,25 | 0,25 | 1,7 |
| caramel colour E150 b | 1,75 | 2 | 2,5 | 2,5 | 0.05 |
| water 2nd phase | 100 | 29,5 | 29 | 30 | 31 |
| sum | 247,04 | 177,04 | 177,04 | 177,79 | 178.03 |
| total sum | 1000,0 | 1000,0 | 1000,0 | 1000,0 | 1000,0 |

The results are presented in Table 5.

### EXAMPLES 7 - 33

Example 1 was repeated and the amount of the ingredients were kept the same, with the differences mentioned in Table 3

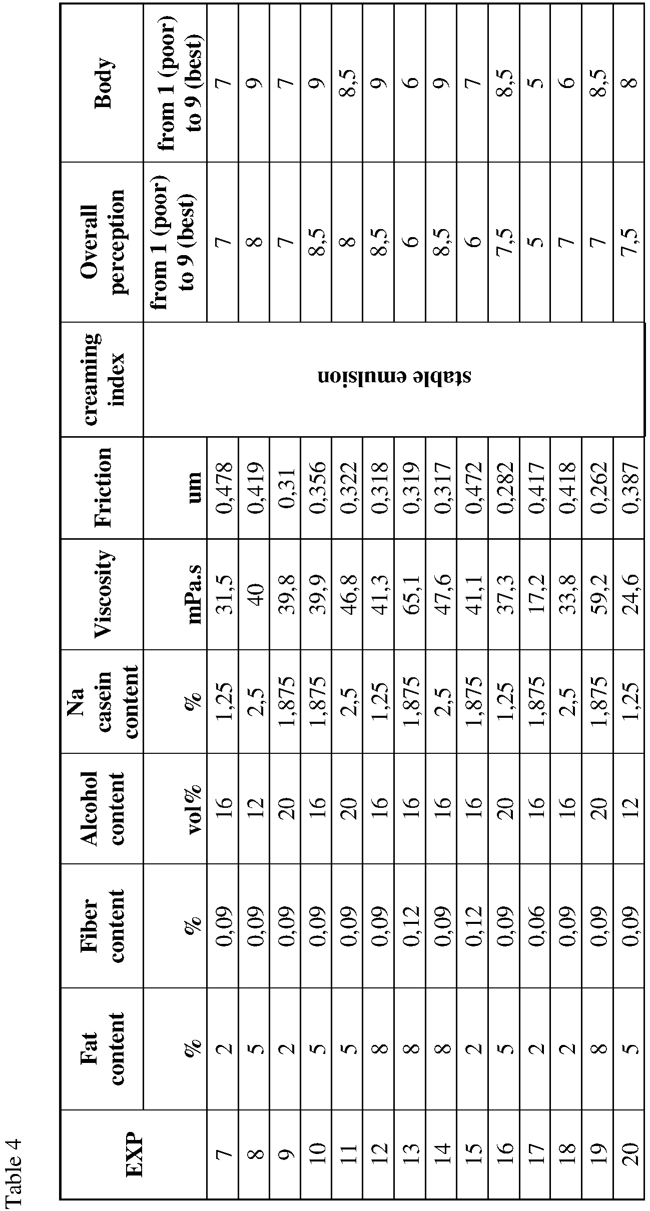

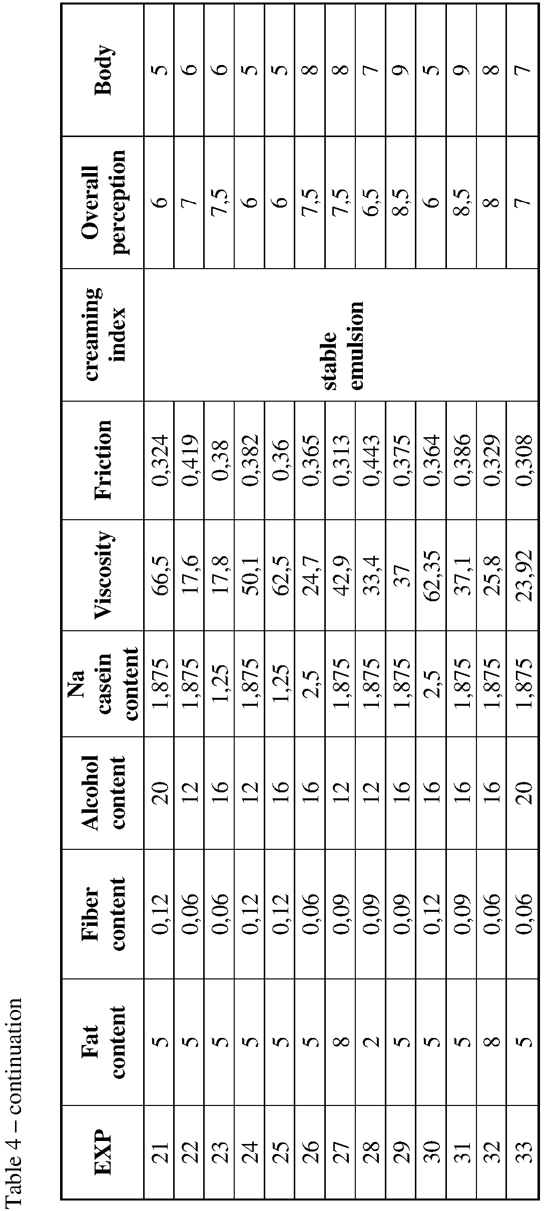

### COMPARATIVE EXPERIMENT 1-4

The ingredients presented in Table 4 were processed in accordance with the method presented in Example 1.

**Table 4**

| **Ingredients** | g/l |
|---|---|
| **cream emulsion** | |
| cream (40 % fat) | **400** |
| *mono -diglyceride* | **1,8** |
| sodium caseinate | 25 |
| tri-sodiumcitrate | 1,8 |
| sugar syrup (65 brix) | 292,3 |
| water 1 st phase | **125** |
| sum | 845,91 |
| | |

| **alcohol and flavour-colour addition** | |
|---|---|
| alcohol (17 %) | 142,79 |
| cream flavour QL-098-081-1 | 3 |
| caramel colour E150 b | 2 |
| water 2nd phase | 6,31 |
| sum | 154,10 |
| total sum | 1000,00 |

In the COMPARTIVE EXPERIMETNTS 2-4, the amount of at was 4 wt%, 6 wt% and 8 wt%, respectively.

Furthermore, the following commercial beverages were investigated in terms of their properties: Baileys; Deluxe; Charles House; Country Lane; and St Michel. The results are presented in Table 5.

We observed that the hydroalcoholic emulsion according to the invention have a of fat reduced and/or alcohol reduced composition that has an acceptable viscosity, friction factors, bodiness, overall perception and stability of the commercial beverages.

**Table 5**

| EX./C.EXP./Product | Brix (BX) | NTU | NTU/BX | Stability (30 days) | | Viscosity (mPa.s) | | Particle Size (microns) | | Density |
|---|---|---|---|---|---|---|---|---|---|---|
| | | | | At 45°C | Ambient | Herschle Bulkley | Newton | D(3,2) | D(4,3) | |
| Baileys | 40,85 | 612 | 15,0 | Stable | Stable | 27,55 | 25,62 | 0,064 | 0,118 | 1,0663 |
| Deluxe | 41,07 | 620 | 15,1 | Stable | Stable | 18,87 | 20,50 | 0,060 | 0,115 | 1,0699 |
| Charles House | | | | Stable | Stable | 6,12 | 8,77 | 0,075 | 0,135 | 1,0928 |
| Country Lane | | | | Stable | Stable | 19,27 | 21,91 | 0,066 | 0,143 | 1,1214 |
| St Michel | | | | Stable | Stable | 17,18 | 13,15 | 0,112 | 0,178 | 1,0623 |
| C. EXP. 1 | 42,13 | | | Stable | Stable | 16,72 | 19,63 | | | 1,0548 |
| C. EXP. 4 | 36,44 | 312 | 8,5 | Stable | Stable | 10,04 | 12,65 | 0,091 | 0,207 | 1,0665 |
| C. EXP. 3 | 34,39 | 577 | 16,8 | Stable | Stable | 7,44 | 10,00 | 0,107 | 0,241 | 1,0633 |
| C. EXP. 2 | 32,83 | 797 | 24,3 | Stable | Stable | 6,11 | 8,60 | 0,142 | 0,264 | 1,0659 |
| Ex. 3 | 33,34 | 278 | 8,3 | Stable | Stable | 46,10 | 23,49 | 0,071 | 1,626 | 1,0642 |
| Ex. 4 | 35,04 | 432 | 12,3 | Stable | Stable | 47,77 | 26,49 | 0,079 | 1,495 | 1,0681 |
| Ex. 5 | 37,42 | 644 | 17,2 | Stable | Stable | 43,99 | 27,13 | 0,078 | 1,438 | 1,0659 |

## Claims

1. A hydroalcoholic emulsion comprising water, alcohol, fat and citrus fibers, wherein the alcohol is in an amount of between 5 vol% and 40 vol%.

2. The emulsion of claim 1 wherein the citrus fibers are in an amount of between 0.001 wt% and 10 wt%.

3. The emulsion of any one of the preceding claims, further comprising an emulsifier.

4. The emulsion of any one of the preceding claims, wherein the citrus fibers are in an amount of between 0.001 wt% and 5 wt%.

5. The emulsion of any one of the preceding claims, wherein the fat is in an amount of between 1 wt% and 30 wt%.

6. The emulsion of any one of the preceding claims, having a viscosity in the range of between 5 mPa.s and 65 mPa.s.

7. The emulsion of any one of the preceding claims, having a pH of 3-10.

8. An alcoholic beverage comprising the emulsion of any one of the preceding claims.

9. The alcoholic beverage of claim 8, wherein said beverage is wine-based or sprit-based.

10. The alcoholic beverage of claim 8, wherein said beverage is chosen from the group consisting of milk punch, Alexander, Pink Squirrel, Golden Cadillac, Irish Alexander, Amaretto Cream, Irish Whiskey, Grasshopper and Cream Whiskey.

11. A method for preparing the hydroalcoholic emulsion of any one of claims 1 to 10, which method comprises the steps of:
a. Providing a first mixture by mixing in water the citrus fibers;
b. dispersing the mixture obtained at step a) with a shearing device to obtain a first sheared mixture;
c. Adding the fat and the emulsifier to the first sheared mixture, and optionally adding also the sugar component to the first sheared mixture to obtain a second mixture;
d. dispersing the second mixture obtained at step a) with a shearing device to obtain a second sheared mixture; and
e. adding the alcohol to the second sheared mixture to obtain a hydroalcoholic emulsion.

## Patentansprüche

1. Hydroalkoholische Emulsion, umfassend Wasser, Alkohol, Fett und Zitrusfasern, wobei der Alkohol in einer Menge zwischen 5 Vol.-% und 40 Vol.-% vorliegt.

2. Emulsion nach Anspruch 1, wobei die Zitrusfasern in einer Menge zwischen 0,001 Gew.-% und 10 Gew.-% vorliegen.

3. Emulsion nach einem der vorstehenden Ansprüche, ferner umfassend einen Emulgator.

4. Emulsion nach einem der vorstehenden Ansprüche, wobei die Zitrusfasern in einer Menge zwischen 0,001 Gew.-% und 5 Gew.-% vorliegen.

5. Emulsion nach einem der vorstehenden Ansprüche, wobei das Fett in einer Menge zwischen 1 Gew.-% und 30 Gew.-% vorliegt.

6. Emulsion nach einem der vorstehenden Ansprüche, die eine Viskosität im Bereich zwischen 5 mPa.s und 65 mPa.s aufweist.

7. Emulsion nach einem der vorstehenden Ansprüche, die einen pH-Wert von 3 bis 10 aufweist.

8. Alkoholisches Getränk, umfassend die Emulsion nach einem der vorstehenden Ansprüche.

9. Alkoholisches Getränk nach Anspruch 8, wobei das Getränk auf Wein oder Spirituosen basiert.

10. Alkoholisches Getränk nach Anspruch 8, wobei das Getränk ausgewählt ist aus der Gruppe bestehend aus Milchpunsch, Alexander, Pink Squirrel, Golden Cadillac, Irish Alexander, Amaretto Cream, Irish Whiskey, Grasshopper und Cream Whiskey.

11. Verfahren zum Herstellen der hydroalkoholischen Emulsion nach einem der Ansprüche 1 bis 10, wobei das Verfahren die Schritte umfasst:
a. Bereitstellen einer ersten Mischung durch Mischen der Zitrusfasern in Wasser;
b. Dispergieren der in Schritt a) erhaltenen Mischung mit einer Schervorrichtung, um eine erste gescherte Mischung zu erhalten;
c. Hinzufügen des Fettes und des Emulgators zu der ersten gescherten Mischung und wahlweise auch Hinzufügen der Zuckerkomponente zu der ersten gescherten Mischung, um eine zweite Mischung zu erhalten;
d. Dispergieren der in Schritt a) erhaltenen zweiten Mischung mit einer Schervorrichtung, um eine zweite gescherte Mischung zu erhalten; und
e. Hinzufügen des Alkohols zu der zweiten gescherten Mischung, um eine hydroalkoholische Emulsion zu erhalten.

## Revendications

1. Émulsion hydroalcoolique comprenant de l'eau, de l'alcool, de la graisse et des fibres d'agrumes, dans laquelle l'alcool est en une quantité comprise entre 5 % en volume et 40 % en volume.

2. Émulsion selon la revendication 1 dans laquelle les fibres d'agrume sont en une quantité comprise entre 0,001 % en poids et 10 % en poids.

3. Émulsion selon l'une quelconque des revendications précédentes, comprenant en outre un émulsifiant.

4. Émulsion selon l'une quelconque des revendications précédentes, dans laquelle les fibres d'agrume sont en une quantité comprise entre 0,001 % en poids et 5 % en poids.

5. Émulsion selon l'une quelconque des revendications précédentes, dans laquelle la matière grasse est en une quantité comprise entre 1 % en poids et 30 % en poids.

6. Émulsion selon l'une quelconque des revendications précédentes, ayant une viscosité dans la plage comprise entre 5 mPa.s et 65 mPa.s.

7. Émulsion selon l'une quelconque des revendications précédentes, ayant un pH de 3 à 10.

8. Boisson alcoolisée comprenant l'émulsion selon l'une quelconque des revendications précédentes.

9. Boisson alcoolisée selon la revendication 8, dans laquelle ladite boisson est à base de vin ou à base de spiritueux.

10. Boisson alcoolisée selon la revendication 8, dans laquelle ladite boisson est choisie dans le groupe constitué de lait de poule, Alexander, Pink Squirrel, Golden Cadillac, Irish Alexander, crème d'Amaretto, whisky irlandais, Grasshopper et crème de whisky.

11. Procédé de préparation de l'émulsion hydroalcoolique selon l'une quelconque des revendications 1 à 10, lequel procédé comprend les étapes consistant à :
a. Fournir un premier mélange en mélangeant dans de l'eau les fibres d'agrume ;
b. disperser le mélange obtenu à l'étape a) avec un dispositif de cisaillement pour obtenir un premier mélange cisaillé ;
c. Ajouter la matière grasse et l'émulsifiant au premier mélange cisaillé, et facultativement ajouter également le composant de sucre au premier mélange cisaillé pour obtenir un second mélange ;
d. disperser le second mélange obtenu à l'étape a) avec un dispositif de cisaillement pour obtenir un second mélange cisaillé ; et
e. ajouter l'alcool au second mélange cisaillé pour obtenir une émulsion hydroalcoolique.
